# EUROPÄISCHE PATENTANMELDUNG

(11) **EP 2 199 055 A1**
(43) Veröffentlichungstag der Anmeldung: **23.06.2010**
(21) Anmeldenummer: 09177057.8
(22) Anmeldetag: 25.11.2009
(51) Int. Cl.: B29C 45/27

(54) **Vorrichtung zum Anspritzen von Kunststoffformteilen**

(30) Priorität: 17.12.2008 DE 102008062376; 12.03.2009 DE 102009012447
(71) Anmelder: Schreck, Hans, 35099 Burgwald-Bottendorf (DE)
(72) Erfinder: Schreck, Hans, 35099 Burgwald-Bottendorf (DE)
(74) Vertreter: Tappe, Hartmut

(57) **Zusammenfassung**

Die Erfindung betrifft eine Vorrichtung (10) zum Anspritzen von Kunststoffformteilen, mit einem Düsenkörper (11) der in ein Formwerkzeug (12) einsetzbar ist, derart, dass einer Formkavität (13) des Formwerkzeugs seitlich neben dem Düsenkörper angeordnet ist, wobei der Düsenkörper zumindest eine Spitzeneinrichtung aufweist, die über eine Umfangsfläche (21) des Düsenkörpers hervorragt, wobei die Spitzeneinrichtung zusammen mit einer Ausnehmung (18) des Formwerkzeugs einen Einspritzkanal (19) für die Formkavität ausbildet, wobei eine Düsenspitze (15) der Spitzeneinrichtung ein im Bereich einer Einspritzöffnung (20) der Formkavität anordbares Spitzenende aufweist, und wobei das Spitzenende relativ zu einer Längsachse (17) der Düsenspitze exzentrisch ausgebildet ist.

## Beschreibung

Die Erfindung betrifft eine Vorrichtung zum Anspritzen von Kunststoffformteilen, mit einem Düsenkörper, der in ein Formwerkzeug einsetzbar ist, derart, dass eine Formkavität des Formwerkzeugs seitlich neben dem Düsenkörper angeordnet ist, wobei der Düsenkörper zumindest eine Spitzeneinrichtung aufweist, die über eine Umfangsfläche des Düsenkörpers hervorragt, wobei die Spitzeneinrichtung zusammen mit einer Ausnehmung des Formwerkzeugs einen Einspritzkanal für die Formkavität ausbildet, wobei eine Düsenspitze der Spitzeneinrichtung ein im Bereich einer Einspritzöffnung der Formkavität anordbares Spitzenende aufweist.

Die bekannten Vorrichtungen dieser Art weisen einen Düsenkörper auf, mit an einem unteren Ende des Düsenköpers angeordneten Spitzeneinrichtungen, welche quer zu einer Längsachse des Düsenkörpers angeordnet sind und so ein seitliches Anspritzen von einer Formkavität ermöglichen. Gegenüber Vorrichtungen, welche an einer Unterseite eines Düsenkörpers eine in Längsrichtung desselben orientierte Spitzeneinrichtung aufweisen, kann an dem vorgenannten Düsenkörper regelmäßig eine Mehrzahl von Spitzeneinrichtungen angeordnet sein, so dass eine entsprechende Anzahl Formkavitäten gleichzeitig angespritzt werden kann.

Aufgrund der Verwendung eines einzelnen Düsenkörpers kann das Formwerkzeug daher vergleichsweise klein ausgeführt sein, da nicht für jede Formkavität ein einzelner Düsenkörper im Formwerkzeug angeordnet werden muss.

Weiter kann beim seitlichen Anspritzen von Formkavitäten eine unzureichende Verteilung des eingespritzten Kunststoffmaterials erfolgen. Dies ist insbesondere dann zutreffend, wenn die Formkavität eine lange, rohrförmige Gestalt aufweist oder so ausgebildet ist, dass eine gleichmäßige Verteilung des Kunststoffmaterials ausgehend von einer Einspritzöffnung der Formkavität aufgrund deren Gestalt erschwert ist. Es ist daher bekannt, derartige, schwierig anzuspritzende Kavitäten schräg, das heißt unter einem spitzen Winkel, beispielsweise relativ zu einer Längsachse der Kavität anzuspritzen. So dass das Kunststoffmaterial zunächst auf eine dann folglich zu einem Einspritzkanal schräg angeordnete Innenfläche der Formkavität gelangt, und so eine verbesserte Verteilung in einem an den Einspritzkanal angrenzenden Bereich der Formkavität erfährt, was demgemäß eine insgesamt verbesserte Verteilung von Kunststoffmaterial in der Formkavität bewirkt. Ein schräges Anspritzen derartiger Formkavitäten wird dadurch gelöst, dass je Formkavität eine Vorrichtung mit einem Düsenkörper vorgesehen ist, der an einem unteren Ende eine Spitzeneinrichtung aufweist, welche in Richtung einer Längsachse des Düsenkörpers orientiert ist, so dass der Düsenkörper insgesamt schräg zur Formkavität im Formwerkzeug angeordnet werden muss. Nachteilig ist hierbei, dass das Formwerkzeug entsprechend groß dimensioniert sein muss, um einen schräg angeordneten Düsenkörper aufnehmen zu können. Da weiter zum Anspritzen mehrerer Formkavitäten eine entsprechende Anzahl Düsenkörper notwendig ist, ergibt sich ein komplizierter und somit teurer Aufbau des Formwerkzeugs.

Ausgehend von diesem Stand der Technik ist es die Aufgabe der vorliegenden Erfindung eine gattungsgemäße Vorrichtung vorzuschlagen, die ein verbessertes Anspritzen von Formkavitäten ermöglicht, wobei ein Formwerkzeug in seinem Aufbau dennoch einfach und in seiner Dimension vergleichsweise klein ausgestaltet sein soll.

Diese Aufgabe wird durch eine Vorrichtung mit den Merkmalen des Anspruchs 1 gelöst.

Die erfindungsgemäße Vorrichtung zum Anspritzen von insbesondere Kunststoffformteilen weist einen Düsenkörper auf, der in ein Formwerkzeug einsetzbar ist, derart, dass eine Formkavität des Formwerkzeugs seitlich neben dem Düsenkörper angeordnet ist. wobei der Düsenkörper zumindest eine Spitzeneinrichtung aufweist, die über eine Umfangsfläche des Düsenkörpers hervorragt, wobei die Spitzeneinrichtung zusammen mit einer Ausnehmung des Formwerkzeugs einen Einspritzkanal für die Formkavität ausbildet, wobei eine Düsenspitze der Spitzeinrichtung ein im Bereich einer Einspritzöffnung der Formkavität anordbares Spitzenende aufweist, und wobei das Spitzenende relativ zu einer Längsachse der Düsenspitze exzentrisch ausgebildet ist.

Unter der seitlichen Anordnung der Formkavität relativ zum Düsenkörper ist eine Anordnung zu verstehen, bei der die Formkavität nicht unmittelbar unterhalb eines Bodens bzw. eines unteren Endes des Düsenkörpers angeordnet ist. Vielmehr ist die Formkavität seitlich oder schräg unterhalb des Düsenkörpers angeordnet, so dass das Formwerkzeug so ausgebildet werden kann, dass eine Mehrzahl von Formkavitäten um den Düsenkörper herum bzw. in dessen näheren Umgebungsbereich angeordnet sein können. Dies schließt jedoch nicht aus, dass die erfindungsgemäße Vorrichtung zum Anspritzen von alleine einer einzigen Formkavität nutzbar ist.

Wesentliches Ziel und Ergebnis der erfindungsgemäßen Düsenspitzengestaltung ist eine Beeinflussung der Flussrichtung des Kunststoffmaterials innerhalb der Formkavität unabhängig von der Lage einer Einspritzöffnung bzw. Düsenspitze. Insbesondere dadurch, dass das Spitzenende relativ zu einer Längsachse der Düsenspitze exzentrisch ausgebildet ist, wird es möglich, eine Flussrichtung von Kunststoffmaterial durch eine Gestalt des Spitzenendes zu beeinflussen. Da der Einspritzkanal unter anderem durch die Anordnung bzw. Gestalt der Düsenspitze bestimmt ist, wird so ein schräges Anspritzen von Formkavitäten ermöglicht. Das exzentrisch ausgebildete Spitzenende bewirkt insbesondere eine räumliche Änderung eines Impulsstroms des in die Formkavität eingespritzten Kunststoffmaterials. Dies ist dann auch möglich, wenn die Düsenspitze gerade zur Formkavität angeordnet ist, da der Impulsstrom auch innerhalb der Formkavität in einem Winkel, abweichend von der Längsachse der Düsenspitze verläuft. Das Kunststoffmaterial kann so auf eine Innenfläche der Formkavität oder in einen bestimmten Bereich der Formkavität zur besseren Verteilung gezielt geleitet werden, ohne eine Relativanordnung der gesamten Düsenspitze zur Formkavität zwingend berücksichtigen zu müssen. Folglich kann auf eine Verwendung von einem im Formwerkzeug schräg angeordneten Düsenkörper verzichtet werden, was eine kleinere Dimensionierung des Formwerkzeugs begünstigt. Auch ist es nicht notwendig am Düsenkörper selbst eine Veränderung vorzunehmen, da alleine das exzentrische Spitzenende eine räumliche Änderung des Impulsstroms bewirkt.

In einer Ausführungsform kann das Spitzenende als eine Kalotte ausgebildet sein. Eine Kalotte, als ein Rotationskörper ist besonders einfach herstellbar und gut an eine Einspritzöffnung einer Formkavität anpassbar.

So kann das Spitzenende als ein schiefer Kreiskegel ausgebildet sein.
Ein Kreiskegel stellt eine besonders einfache Ausführungsform eines Spitzenendes dar und kann durch eine einfache Bearbeitung der Düsenspitze ausgebildet werden.

In einer weiteren Ausführungsform kann das Spitzenende als eine Nase ausgebildet sein. Eine Nase kann einen Impulsstrom von Kunststoffmaterial derart beeinflussen, dass der Impulsstrom gut an besonders schwierig anzuspritzende Innenformen einer Formkavität anpassbar wird. Weiter ermöglicht eine Nase eine starke räumliche Änderung des Impulsstroms. Die Nase kann so ausgebildet sein, dass eine Längsachse des von der Nase gebildeten Spitzenendes in einem vergleichsweise großen Winkel zu einer Längsachse der Düsenspitze orientiert ist. Ein dementsprechend schräger, relativ zu einer Innenfläche einer Formkavität orientierter Impulsstrom kann so ausgebildet werden.

In einer besonders vorteilhaften Ausführungsform kann die Düsenspitze eine Zuführleitung aufweisen. So kann auch durch die Düsenspitze hindurch Kunststoffmaterial durch gezieltes Einspritzen der Formkavität zugeführt werden. Da die Austrittsöffnung unmittelbar am Spitzenende ausgebildet sein kann, kann unabhängig von der Gestalt des Einspritzkanals eine Richtungsänderung eines Impulsstroms bewirkt werden. Demnach kann allein die Düsenspitze unabhängig vom Einspritzkanal eine Düse ausbilden. Die Zuführleitung der Düsenspitze kann weiter an eine Zuführleitung des Düsenkörpers gekoppelt sein, dass heißt, ein derartiger Düsenkörper kann eine Zuführung von Kunststoffmaterial unmittelbar durch die Düsenspitze hindurch in die Formkavität ermöglichen. Weiter kann eine Austrittsöffnung der Zuführleitung koaxial zu einer Längsachse des Spitzenendes ausgebildet sein.

Alternativ kann eine Austrittsöffnung der Zuführleitung relativ zu einer Längsachse des Spitzenendes exzentrisch ausgebildet sein. Beide der vorgenannten Anordnungen der Austrittsöffnung relativ zum Spitzenende bzw. zu dessen Längsachse ermöglichen eine vorteilhafte Beeinflussung einer Richtung des Impulsstroms in Abhängigkeit des jeweiligen Anwendungsfalls bzw. der Formkavität. Die exzentrische Austrittsöffnung kann insbesondere auch durch eine schräge Querbohrung, welche ein Austrittsende der Zuführleitung ausbildet, ausgebildet sein. Die Querbohrung trifft in diesem Fall schräg auf die Zuführleitung.

Die Zuführleitung kann so in der Düsenspitze angeordnet sein, dass eine Längsachse der Zuführleitung relativ zu der Längsachse der Düsenspitze parallel ausgebildet ist. Die Düsenspitze ist dann besonders einfach auszubilden und kostengünstig herstellbar, da die Zuführleitung gerade durch die Düsenspitze verläuft.

Neben einer koaxialen Anordnung der Zuführleitung in der Düsenspitze kann die Zuführleitung auch so in der Düsenspitze angeordnet sein, dass die Längsachse der Zuführleitung relativ zu der Längsachse der Düsenspitze in einem Abstand e ausgebildet ist. Demnach kann die Zuführleitung ebenfalls exzentrisch in der Düsenspitze bis hin zu dem Spitzenende ausgebildet sein. Dadurch kann eine Herstellung einer Austrittsöffnung der Zuführleitung, je nach Form eines Spitzenendes, erheblich vereinfacht werden, insbesondere, da die Zuführleitung an verschiedenen Positionen des Spitzenendes austreten kann.

Ein Anschluss der Zuführleitung an eine Zuführleitung des Düsenkörpers kann durch eine Dichtfläche gebildet werden, die parallel zu einer Längsachse des Düsenkörpers ausgebildet ist. Die Düsenspitze ist dann noch einfacher ausbildbar, da am Düsenkörper keine schrägen Flächen ausgebildet werden müssen.

Die Düsenspitze kann so im Düsenkörper angeordnet sein, dass eine Symmetrieebene der Düsenspitze mit einer Symmetrieebene des Düsenkörpers übereinstimmt. Eine beispielsweise orthogonal zur Symmetrieebene des Düsenkörpers orientierte Innenfläche einer Formkavität ist so ebenfalls orthogonal zur Symmetrieebene der Düsenspitze angeordnet, so dass die Düsenspitze mit einem nicht zwangsläufig für die Düsenspitze vorgesehenen Formwerkzeug verwendet werden kann.

Auch kann die Düsenspitze so im Düsenkörper angeordnet sein, dass eine Symmetrieebene der Düsenspitze in einem Winkel β relativ zu einer Symmetrieebene des Düsenkörpers angeordnet ist. Dies kann insbesondere dann vorteilhaft sein, wenn eine Formkavität bzw. eine Innenfläche der Formkavität, die einen Impulsstrom umleiten soll, zur Symmetrieebene des Düsenkörpers und folglich zu einer Orientierung des Formwerkzeugs nicht symmetrisch ist.

Weiter kann die Düsenspitze so ausgebildet sein, dass sie eine Mehrzahl von Spitzenenden aufweist. Die Spitzenenden können beispielsweise als zwei schiefe Kreiskegel ausgebildet sein, die sich einander durchdringen. In Abhängigkeit der Gestalt der Formkavität können so mit einer einzigen Düsenspitze mehrere Innenflächen der Formkavität mit einem Impulsstrom von Kunststoffmaterial beaufschlagt werden, was eine verbesserte Verteilung des Kunststoffmaterials in der Formkavität begünstigt.

Die Spitzenenden der so ausgebildeten Düsenspitze können mit ihren Spitzen symmetrisch zu einer Symmetrieebene der Düsenspitze angeordnet sein. Die demnach gleichartig orientierten Spitzenenden sind so vereinfacht herstellbar.

Eine weitere, vereinfachte Herstellung des Düsenkörpers kann ermöglicht werden, wenn eine Längsachse des Einspritzkanals orthogonal relativ zu einer Längsachse des Düsenkörpers angeordnet ist. Da eine Gestalt der Formkavität hinsichtlich einer verbesserten Einspritzung von Kunststoffmaterial alleine durch die Ausbildung der Düsenspitzen berücksichtigt werden kann, kann eine derart einfache Ausbildung des Düsenkörpers vorgesehen werden.

Alternativ kann eine Längsachse des Einspritzkanals in einem spitzen Winkel α relativ zu einer Längsachse des Düsenkörpers angeordnet sein. Folglich ist die Düsenspitze ebenfalls in dem Winkel α angeordnet, woraus sich erweitere Möglichkeiten zur Anordnung einer Formkavität relativ zum Düsenkörper oder zum schrägen Anspritzen einer Formkavität ergeben. Die Vorrichtung ist so gegenüber einer im Wesentlichen gerade in einem Formwerkzeug angeordneten Düsenspitze noch besser an die Formkavität anpassbar.

Auch ist es vorteilhaft, wenn die Spitzeineinrichtung aus einer Düsenspitze und einem Dichtelement gebildet ist, wodurch ein isolierender Ringspalt zwischen dem Düsenkörper und dem Formwerkzeug ausgebildet werden kann.

Ein Einspritzkanal kann besonders einfach ausgebildet werden, wenn das Dichtelement koaxial zur Düsenspitze angeordnet ist. Das Dichtelement umgibt dann die Düsenspitze derart, dass zwischen dem Dichtelement und der Düsenspitze ein Ringspalt ausgebildet wird, welcher den Einspritzkanal zumindest teilweise ausbildet und mittels der Düsenspitze eine gute Temperierung des Kunststoffmaterials bzw. mittels des Dichtelements eine Abdichtung des Einspritzkanals gewährleistet.

In einer Ausführungsform kann das Dichtelement über die Umfangsfläche des Düsenkörpers hervorragen, derart dass ein Ringspalt zwischen Düsenkörper und Formwerkzeug abdichtbar ist. Wärmeverluste des Düsenkörpers können so aufgrund der vergleichsweise kleinen Kontaktfläche zwischen der Vorrichtung und dem Formwerkzeug minimiert werden. Auch kann kein Kunststoffmaterial in den Ringspalt zwischen dem Düsenkörper und dem Formwerkzeug eindringen, was eine unnötige Verschmutzung des Düsenkörpers verhindert und eventuelle Reinigungsarbeiten beim Auswechseln der Vorrichtung begrenzt.

In einer weiteren Ausführungsform der Vorrichtung kann eine Dichtfläche des Dichtelements mit einer Innenfläche einer Düsenkörperaufnahme des Formwerkzeugs abdichtend zur Anlage gebracht werden. Das heißt die Düsekörperaufnahme des Formwerkzeugs kann im Bereich der Spitzeneinrichtung über eine gerade, einfach herzustellende Fläche verfügen, bzw. als eine Bohrung zur Aufnahme des Düsenkörpers ausgebildet sein. Eine den Düsenkörper vollständig umgebende, ringförmige Dichtfläche kann demnach einen unerwünschten Austritt von Kunststoffmaterial verhindern.

Auch kann die Düsenspitze über die Umfangsfläche des Düsenkörpers hervorragen. Das Kunststoffmaterial kann dann besonders wirkungsvoll im gesamten Einspritzkanal temperiert werden.

Ist eine Mehrzahl von Spitzeneinrichtungen am Düsenkörper vorgesehen, kann die Vorrichtung als so genannte Mehrfachdüse ausgebildet sein, mit der eine Mehrzahl von Formkavitäten eines Formwerkzeugs angespritzt werden kann. Es besteht dann nicht mehr die Notwendigkeit für jede Formkavität einen einzelnen, konventionellen Düsenkörper mit einer Spitzeneinrichtung im Formwerkzeug vorzusehen.

Wenn der Düsenkörper zumindest abschnittsweise eine zylindrische, kreisförmige, elliptische, ovale oder mehreckige Gestalt aufweist, können die Spitzeneinrichtungen im Wesentlichen sternartig aus dem Düsenkörper hervorragen. Auch kann dann die Vorrichtung besonders einfach hergestellt werden bzw. ist bei einer zylindrischen Gestalt lediglich eine Bohrung im Formwerkzeug zur Aufnahme des Düsenkörpers notwendig, wobei sich durch eine äquidistante Anordnung der Spitzeneinrichtungen am Umfang des Düsenkörpers eine besonders raumsparende Verteilung der Formkavität hinsichtlich der Dimension des Formwerkzeugs ergibt.

Der Düsenkörper kann zum Auswechseln der Düsenspitzen in einem Formwerkzeug verbleiben, wenn an einem unteren Ende des Düsenkörpers eine Ausnehmung ausgebildet ist, wobei zumindest eine durchgehende Öffnung die Ausnehmung mit einer Umfangsfläche des Düsenkörpers verbindet, und wobei die Düsenspitze so ausgebildet ist, dass sie durch die Ausnehmung in die Öffnung einbringbar und dort lösbar besfestigbar ist. So kann eine Düsenspitze im Düsenkörper, ohne Demontage des Formwerkzeuges oder des Düsenkörpers, leicht ausgewechselt werden. Für eine Formkavität kann dann eine Düsenspitze ausgewählt werden, die einen für eine Schmelzeverteilung optimalen Impulsstrom bewirkt.

Nachfolgend wird eine bevorzugte Ausführungsform der Erfindung unter Bezugnahme auf die beigefügte Zeichnung näher erläutert.

Es zeigen:
- **Fig. 1**: eine erste Ausführungsform der Vorrichtung in einem in einer Schnittansicht dargestellten Formwerkzeug;
- **Fig. 2**: eine Unteransicht der ersten Ausführungsform der Vorrichtung mit dem Formwerkzeug aus **Fig. 1****;**
- **Fig. 3a**: eine Vorderansicht einer Düsenspitze aus dem Stand der Technik;
- **Fig. 3b**: eine Teilansicht der Düsenspitze aus **Fig. 3a****;**
- **Fig. 4a**: eine erste Ausführungsform einer Düsenspitze in einer Vorderansicht;
- **Fig. 4b**: eine Teilansicht der Düsenspitze aus **Fig. 4a****;**
- **Fig. 5a**: eine Vorderansicht einer zweiten Ausführungsform einer Düsenspitze;
- **Fig. 5b**: eine Teilansicht der Düsenspitze aus **Fig. 5a****;**
- **Fig. 6a**: eine Vorderansicht einer dritten Ausführungsform einer Düsenspitze;
- **Fig. 6b**: eine Teilansicht der Düsenspitze aus **Fig. 6a****;**
- **Fig. 7a**: eine Vorderansicht einer vierten Ausführungsform einer Düsenspitze;
- **Fig. 7b**: eine Teilansicht der Düsenspitze aus **Fig. 7a****;**
- **Fig. 8a**: eine Vorderansicht einer fünften Ausführungsform einer Düsenspitze;
- **Fig. 8b**: eine Teilansicht der Düsenspitze aus **Fig. 8a****;**
- **Fig. 9a**: eine Vorderansicht einer sechsten Ausführungsform einer Düsenspitze;
- **Fig. 9b**: eine Teilansicht der Düsenspitze aus **Fig. 9a****;**
- **Fig. 10**: eine zweite Ausführungsform der Vorrichtung in einem in einer Schnittansicht dargestellten Formwerkzeug;
- **Fig. 11**: eine Unteransicht der zweiten Ausführungsform der Vorrichtung aus **Fig. 10****;**
- **Fig. 12a**: eine Vorderansicht einer siebten Ausführungsform einer Düsenspitze;
- **Fig. 12b**: eine Teilansicht der Düsenspitze aus **Fig. 12a****;**
- **Fig. 13a**: eine Vorderansicht einer achten Ausführungsform einer Düsenspitze;
- **Fig. 13b**: eine Teilansicht der Düsenspitze aus **Fig. 13a****;**
- **Fig. 14a**: eine Vorderansicht einer neunten Ausführungsform einer Düsenspitze;
- **Fig. 14b**: eine Teilansicht der Düsenspitze aus **Fig. 14a****;**
- **Fig. 15a**: eine Vorderansicht einer zehnten Ausführungsform einer Düsenspitze;
- **Fig. 15b**: eine Teilansicht der Düsenspitze aus **Fig. 15a****,**
- **Fig. 16a**: eine Vorderansicht einer elften Ausführungsform einer Düsenspitze;
- **Fig. 16b**: eine Teilansicht der Düsenspitze aus **Fig. 16a****.**

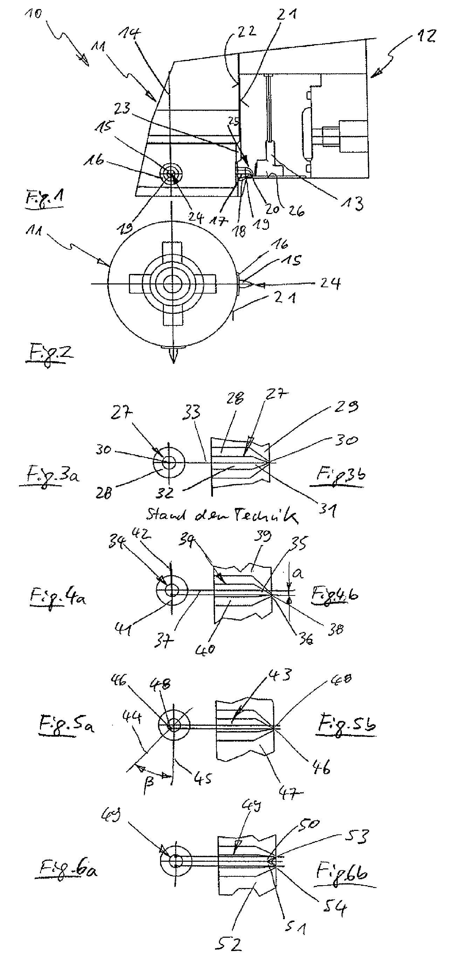

Eine Zusammenschau der **Fig. 1** und **2** zeigt eine Vorrichtung 10 mit einem Düsenkörper 11, welcher in ein Formwerkzeug 12, das hier lediglich in einer Teilschnittansicht dargestellt ist, eingesetzt ist. Das Formwerkzeug 12 weist eine Mehrzahl von Formkavitäten 13 auf, welche seitlich und umfänglich des Düsenkörpers 11 sowie äquidistant und symmetrisch zu einer Symmetrieachse 14 des Düsenkörpers 11 angeordnet sind. In den Düsenkörper 11 sind dementsprechend eine Mehrzahl von Düsenspitzen 15 zusammen mit die Düsenspitzen 15 umgebenden Dichtelementen 16 eingesetzt. Eine Längsachse 17 der Düsenspitze 15 ist dabei jeweils orthogonal zur Symmetrieachse 14 des Düsenkörpers 11 orientiert. Zwischen dem Dichtelement 16 bzw. einer Ausnehmung 18 im Formwerkzeug 12 wird ein Einspritzkanal 19 ausgebildet, der im Wesentlichen koaxial zur Düsenspitze 15 verläuft und durch eine Einspritzöffnung 20 in die Formkavität 13 mündet. Das Dichtelement 16 ragt hier soweit über eine Umfangsfläche 21 des Düsenkörpers 11 hervor, dass das Dichtelement 16 an einer Innenfläche 22 des Formwerkzeugs 12 abdichtend zur Anlage gelangt und so einen Ringspalt 23, welcher zwischen dem Düsenkörper 11 und dem Formwerkzeug 12 ausgebildet ist, abdichtend überbrückt. Ein Spitzenende der Düsenspitze 15 ist als eine Nase 24 ausgebildet und ebenfalls in Richtung der Einspritzöffnung 20 orientiert. Fließt nun ein hier nicht gezeigtes Kunststoffmaterial durch den Einspritzkanal 19 an der Nase 24 vorbei hin zur Einspritzöffnung 20, bewirkt die Nase 24 eine Richtungsänderung eines Impulsstroms des Kunststoffmaterials, entsprechend der mit dem Pfeil 25 angedeuteten Bewegungsrichtung, gerichtet auf eine Innenfläche 26 der Formkavität 13. Folglich kann auf ein schräges Anspritzen der Formkavität 13 mit einem speziell dafür vorgesehenen Düsenkörper verzichtet werden.

Die **Fig. 3a** und **3b** zeigen eine Düsenspitze 27 nach dem Stand der Technik sowie deren koaxiale Anordnung relativ zu einem Einspritzkanal 28 in einem in einer Teilschnittansicht dargestellten Formwerkzeug 29. Der Einspritzkanal 28 mündet in eine Einspritzöffnung 30 einer hier nicht gezeigten Formkavität. Ein als Kreiskegel 31 ausgebildetes Spitzenende der Düsenspitze 27 bildet einen Übergang eines Schafts 32 der Düsenspitze 27 hin zur Einspritzöffnung 30 aus. Die Düsenspitze 27 ist insbesondere rotationssymmetrisch zu einer Längsachse 33 der Düsenspitze 27 ausgebildet, wobei die Längsachse 33 in der Einspritzöffnung 30 fluchtet. Durch den Einspritzkanal 28 hindurch geleitetes, hier nicht gezeigtes Kunststoffmaterial, gelangt so ebenfalls mit einem Impulsstrom der in Richtung der Längsachse 33 ausgebildet ist in die nicht dargestellte Formkavität.

Die **Fig. 4a** und **4b** zeigen eine Düsenspitze 34 bei der im Unterschied zu der in den **Fig. 3a** und **3b** dargestellten Düsenspitze ein Spitzenende als schiefer bzw. exzentrischer Kreiskegel 35 ausgebildet ist. Eine Spitze 36 des Kreiskegels 35 ist um den Abstand a von einer Längsachse 37 der Düsenspitze 34 beabstandet, das heißt eine hier nicht näher dargestellte Längsachse des Kreiskegels 35 weicht von der Längsachse 37 der Düsenspitze 34 ab. Eine Einspritzöffnung 38 eines Formwerkzeugs 39 ist demnach ebenfalls im Abstand a zur Längsachse 37 angeordnet. Durch den so ausgebildeten Einspritzkanal 40 strömendes Kunststoffmaterial erfährt durch den schiefen Kreiskegel 35 eine räumliche Änderung seines Impulsstroms entsprechend der Orientierung des Kreiskegels 35 beim Einspritzen in die hier nicht gezeigte Formkavität. Eine Symmetrieebene 41 der Düsenspitze 34 stimmt hier mit einer Symmetrieebene 42 eines hier nicht gezeigten Düsenkörpers überein, so dass der Impulsstrom in vertikaler Richtung nach unten gerichtet ist.

Die **Fig. 5a** und **5b** zeigen eine Düsenspitze 43 die im Unterschied zu der Düsenspitze aus den **Fig. 4a** und **4b** so in einem hier nicht gezeigten Düsenkörper angeordnet ist, dass eine Symmetrieebene 44 der Düsenspitze 43 in einem Winkel β relativ zu einer Symmetrieebene 45 des Düsenkörpers angeordnet ist. Eine Einspritzöffnung 46 eines Formwerkzeugs 47 ist demnach in Übereinstimmung mit einer Spitze 48 der Düsenspitze 43 angeordnet.

Eine Düsenspitze 49 mit zwei jeweils als schiefer bzw. exzentrischer Kreiskegel 50 und 51 ausgebildeten Spitzenenden zeigen die **Fig. 6a** und **6b****.** Ein Formwerkzeug 52 weist in Übereinstimmung mit der Düsenspitze 49 zwei Einspritzöffnungen 53 und 54 auf.

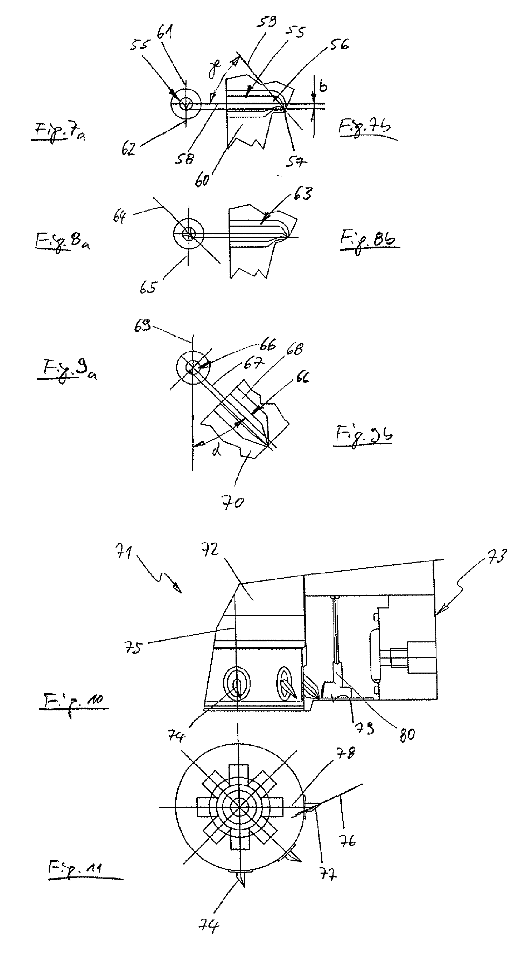

Die **Fig. 7a** und **7b** zeigen eine Düsenspitze 55 mit einem als Nase 56 ausgebildeten Spitzenende. Eine Spitze 57 der Nase 56 ist um einen Abstand b relativ zu einer Längsachse 58 der Düsenspitze 55 versetzt ausgebildet. Eine Längsachse 59 der Nase 56 verläuft um einen Winkel y versetzt relativ zur Längsachse 58 der Düsenspitze 55. Die Längsachse 59 entspricht in diesem Fall im Wesentlichen einer Richtung eines Impulsstroms von Kunststoffmaterial beim Einspritzen in eine hier nicht gezeigte Formkavität eines Formwerkzeugs 60. Weiter entspricht eine Symmetrieebene 61 der Düsenspitze einer Symmetrieebene 62 eines hier nicht gezeigten Düsenkörpers.

Eine in den **Fig. 8a** und **8b** gezeigte Düsenspitze 63 entspricht im Wesentlichen der in den **Fig. 7a** und **7b** darstellten Düsenspitze, wobei eine Symmetrieebene 64 der Düsenspitze 63 entsprechend der Darstellung der **Fig. 5a** und **5b** von einer Symmetrieebene 65 eines hier nicht dargestellten Düsenkörpers abweicht.

Die **Fig. 9a** und **9b** zeigen eine Düsenspitze 66 entsprechend der Darstellung in den **Fig. 5** und **5b****,** wobei im Unterschied die Düsenspitze 66 so an einem hier nicht gezeigten Düsenkörper angeordnet ist, dass eine Längsachse 67 der Düsenspitze 66 bzw. eines Einspritzkanals 68 in einem spitzen Winkel α relativ zu einer Längsachse 69 des Düsenkörpers angeordnet ist. Ein Formwerkzeug 70 ist dementsprechend ausgebildet. Durch eine derartige Anordnung der Düsenspitze 66 ist ein Impulsstrom von Kunststoffmaterial in einer nahezu beliebigen Richtung relativ zum Düsenkörper in eine hier nicht gezeigte Formkavität ausbildbar. Formkavitäten können so an einem Düsenkörper angeordnet werden, dass eine Größe eines Formwerkzeugs minimiert wird, wobei gleichzeitig eine verbesserte Einspritzung von Kunststoffmaterial in die Formkavität möglich wird.

Eine Zusammenschau der **Fig. 10** und **11** zeigt eine Vorrichtung 71 mit einem Düsenkörper 72 in einem Formwerkzeug 73. Düsenspitzen 74 sind dabei in Art der in den **Fig. 9a** und **9b** dargestellten Düsenspitze relativ zu einer Längsachse 75 des Düsenkörpers 72 am Düsenkörper 72 angeordnet. Insbesondere eine Längsachse 76 eines exzentrischen Kreiskegels 77 der Düsenspitze 74 weicht von einer Längsachse 78 der Düsenspitze 74 ab, so dass bei einer gerichteten Einspritzung von Kunststoffmaterial auf eine Innenfläche 79 einer Formkavität 80 eine Verwirbelung des Kunststoffmaterials zur Optimierung einer Befüllung der Formkavität 80 erfolgt.

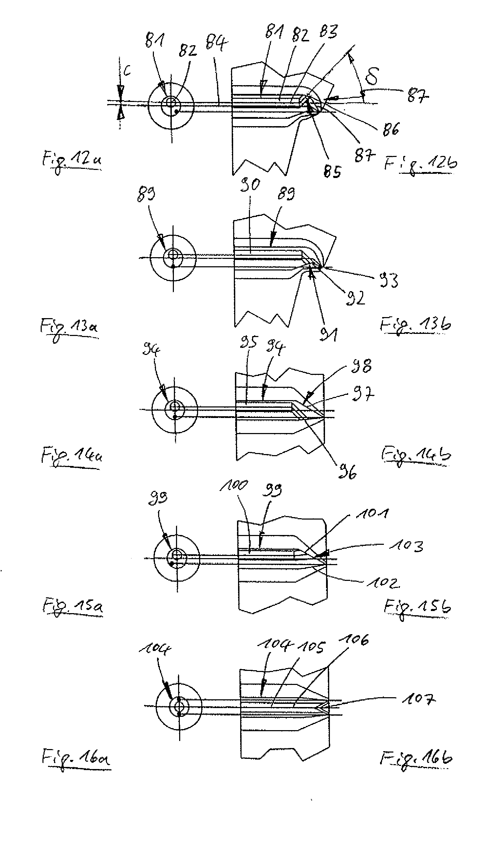

Die **Fig. 12a** und **12b** zeigen eine Düsenspitze 81 entsprechend der Darstellung in den **Fig. 8a** und **8b****,** wobei im Unterschied die Düsenspitze 81 eine Zuführleitung 82 aufweist. Eine Längsachse 83 der Zuführleitung 82 ist parallel und in einem Abstand c zu einer Längsachse 84 der Düsenspitze 81 angeordnet. Die Zuführleitung 82 bildet ein Austrittsende 85 mit einer Austrittsöffnung 86 aus. Das Austrittsende 85 ist in einem Winkel δ relativ zur Längsachse 83 der Zuführleitung 82 angeordnet, so dass durch die Zuführleitung 82 strömendes, hier nicht gezeigtes Kunststoffmaterial im Bereich eines Rückens 87 einer Nase 88 der Düsenspitze 81 austritt.

Die **Fig. 13a** und **13b** zeigen eine Düsenspitze 89, die im Wesentlichen der in den **Fig. 7a** und **7b** dargestellten Düsenspitze entspricht, wobei im Unterschied eine Zuführleitung 90 mit einem Austrittsende 91 so in der Düsenspitze 89 angeordnet ist, dass eine Austrittsöffnung 92 in unmittelbarer Nähe einer Spitze 93 ausgebildet wird.

Eine in den **Fig. 14a** und **14b** gezeigte Düsenspitze 94 entspricht im Wesentlichen der Darstellung in den **Fig. 4a** und **4b****,** wobei im Unterschied die Düsenspitze 94 eine Zuführleitung 95 aufweist, die im Bereich einer verkürzten, exzentrischen Mantelfläche 97 eines Kreiskegels 98 eine Austrittsöffnung 96 ausbildet.

Die **Fig. 15a** und **15b** zeigen eine Düsenspitze 99 die im Unterschied zu der Düsenspitze aus den **Fig. 5a** und **5b** eine Zuführleitung 100 mit einer Austrittsöffnung 101 in einem verlängerten Bereich einer exzentrischen Mantelfläche 102 eines Kreiskegels 103 aufweist.

Die **Fig. 16a** und **16b** zeigen eine Düsenspitze 104 entsprechend der Darstellung in den **Fig. 6a** und **6b****,** wobei im Unterschied die Düsenspitze 104 eine Zuführleitung 105 aufweist, die koaxial zu einer Längsachse 106 der Düsenspitze 104 angeordnet ist, so dass eine Austrittsöffnung 107 ebenfalls koaxial zu der Längsachse 106 ausgebildet wird.

## Patentansprüche

1. Vorrichtung (10, 71) zum Anspritzen von Kunststoffformteilen, mit einem Düsenkörper (11, 72), der in ein Formwerkzeug (12, 39, 47, 52, 60, 70, 73) einsetzbar ist, derart, dass eine Formkavität (13, 80) des Formwerkzeugs seitlich neben dem Düsenkörper angeordnet ist, wobei der Düsenkörper zumindest eine Spitzeneinrichtung aufweist, die über eine Umfangsfläche (21) des Düsenkörpers hervorragt, wobei die Spitzeneinrichtung zusammen mit einer Ausnehmung (18) des Formwerkzeugs einen Einspritzkanal (19, 40, 68) für die Formkavität ausbildet, wobei eine Düsenspitze (15, 34, 43, 49, 55, 63, 66, 74, 81, 89, 94, 99, 104) der Spitzeneinrichtung ein im Bereich einer Einspritzöffnung (20, 38, 46, 53, 54) der Formkavität anordbares Spitzenende aufweist,
**dadurch gekennzeichnet,**
**dass** das Spitzenende relativ zu einer Längsachse (17, 37, 58, 67, 78, 84, 106) der Düsenspitze exzentrisch ausgebildet ist.

2. Vorrichtung nach Anspruch 1,
**dadurch gekennzeichnet,**
**dass** das Spitzenende als eine Kalotte ausgebildet ist.

3. Vorrichtung nach Anspruch 2,
**dadurch gekennzeichnet,**
**dass** das Spitzenende als ein schiefer Kreiskegel (35, 50 51, 98) ausgebildet ist.

4. Vorrichtung nach Anspruch 1,
**dadurch gekennzeichnet,**
**dass** das Spitzenende als eine Nase (24, 56, 88) ausgebildet ist.

5. Vorrichtung nach einem der vorangehenden Ansprüche,
**dadurch gekennzeichnet,**
**dass** die Düsenspitze (104) eine Zuführleitung (105) aufweist, wobei eine Austrittsöffnung (107) der Zuführleitung koaxial zu einer Längsachse des Spitzenendes ausgebildet ist.

6. Vorrichtung nach einem der Ansprüche 1 bis 4,
**dadurch gekennzeichnet,**
**dass** die Düsenspitze (81, 89, 94, 99) eine Zuführleitung (82, 90, 95, 100) aufweist, wobei Austrittsöffnung (86, 92, 96, 101) der Zuführleitung relativ zu einer Längsachse des Spitzenendes exzentrisch ausgebildet ist.

7. Vorrichtung nach einem der Ansprüche 5 bis 6,
**dadurch gekennzeichnet,**
**dass** eine Längsachse (83) der Zuführleitung (82, 90, 95, 100, 105) relativ zu der Längsachse (84, 106) der Düsenspitze (81, 89, 94, 99, 104) parallel ausgebildet ist.

8. Vorrichtung nach Anspruch 7,
**dadurch gekennzeichnet,**
**dass** die Längsachse (83) der Zuführleitung (82, 90, 95, 100) relativ zu der Längsachse (84) der Düsenspitze (81, 89, 94, 99) in einem Abstand c ausgebildet ist.

9. Vorrichtung nach einem der Ansprüche 5 bis 8,
**dadurch gekennzeichnet,**
**dass** ein Anschluss der Zuführleitung (82, 90, 95, 100, 105) an eine Zuführleitung des Düsenkörpers (11, 72) durch eine Dichtfläche gebildet wird, die parallel zu einer Längsachse (14, 75) des Düsenkörpers ausgebildet ist.

10. Vorrichtung nach einem der vorangehenden Ansprüche,
**dadurch gekennzeichnet,**
**dass** die Düsenspitze (43, 63, 74, 81, 99) so im Düsenkörper (72) angeordnet ist, dass eine Symmetrieebene (64) der Düsenspitze in einem Winkel β relativ zu einer Symmetrieebene (65) des Düsenkörpers angeordnet ist.

11. Vorrichtung nach einem der vorangehenden Ansprüche,
**dadurch gekennzeichnet,**
**dass** die Düsenspitze (49, 104) eine Mehrzahl von Spitzenenden aufweist.

12. Vorrichtung nach Anspruch 11,
**dadurch gekennzeichnet,**
**dass** die Spitzenenden mit ihren Spitzen symmetrisch zu einer Symmetrieebene der Düsenspitze (49, 104) angeordnet sind.

13. Vorrichtung nach einem der vorangehenden Ansprüche,
**dadurch gekennzeichnet,**
**dass** eine Längsachse (17, 37, 58) des Einspritzkanals (19, 40) orthogonal relativ zu einer Längsachse (14) des Düsenkörpers (11) angeordnet ist.

14. Vorrichtung nach einem der Ansprüche 1 bis 12,
**dadurch gekennzeichnet,**
**dass** eine Längsachse (67, 78) des Einspritzkanals (68) in einem spitzen Winkel α relativ zu einer Längsachse (75) des Düsenkörpers (72) angeordnet ist.

15. Vorrichtung nach einem der vorangehenden Ansprüche,
**dadurch gekennzeichnet,**
**dass** die Spitzeneinrichtung aus einer Düsenspitze (15, 34, 43, 49, 55, 63, 66, 74, 81, 89, 94, 99, 104) und einem Dichtelement (16) gebildet ist.

16. Vorrichtung nach Anspruch 15,
**dadurch gekennzeichnet,**
**dass** das Dichtelement (16) koaxial zur Düsenspitze (15, 34, 43, 49, 55, 63, 66, 74, 81, 89, 94, 99, 104) angeordnet ist.

17. Vorrichtung nach Anspruch 15 oder 16,
**dadurch gekennzeichnet,**
**dass** das Dichtelement (16) über die Umfangsfläche (21) des Düsenkörpers (11, 72) hervorragt, derart, dass ein Ringspalt (23) zwischen Düsenkörper und Formwerkzeug (12, 39, 47, 52, 60, 70, 73) abdichtbar ist.

18. Vorrichtung nach einem der vorangehenden Ansprüche,
**dadurch gekennzeichnet,**
**dass** an einem unteren Ende des Düsenkörpers eine Ausnehmung ausgebildet ist, wobei zumindest eine durchgehende Öffnung die Ausnehmung mit einer Umfangsfläche des Düsenkörpers verbindet, wobei die Düsenspitze so ausgebildet ist, dass sie durch die Ausnehmung in die Öffnung einbringbar und dort lösbar befestigbar ist.
